# EUROPÄISCHE PATENTSCHRIFT

(11) **EP 1 266 816 B1**
(45) Veröffentlichungstag und Bekanntmachung des Hinweises auf die Patenterteilung: **07.02.2007**
(21) Anmeldenummer: 02010398.2
(22) Anmeldetag: 08.05.2002
(51) Int. Cl.: B62D 1/181, B62D 1/18

(54) **Verriegelungseinheit für eine einstellbare Lenksäule**
Lock assembly for an adjustable steering column
Ensemble de verrouillage pour un ensemble de colonne de direction réglable en position

(30) Priorität: 11.06.2001 DE 10129165
(43) Veröffentlichungstag der Anmeldung: 18.12.2002
(73) Patentinhaber: Dr.Ing. h.c.F. Porsche Aktiengesellschaft, 70435 Stuttgart (DE)
(72) Erfinder: Schulz, Achim, 75223 Niefern-Öschelbronn (DE); Prätorius, Alexander, 71254 Ditzingen-Heimerdingen (DE); Klandt, Michael, 71686 Remseck (DE)

(56) Entgegenhaltungen:
- EP-A- 1 070 651
- DE-A- 4 413 798
- US-A- 4 752 085
- US-A- 5 275 066
- US-A- 5 477 744

## Beschreibung

Die Erfindung betrifft eine einstellbare Lenksäule mit einer Verstelleinrichtung zur Verstellung der Lenksäule in Höhenrichtung und einer Verriegelung der Lenksäule in Höhenrichtung d.h. Kipprichtung, insbesondere für Kraftfahrzeuge.

Aus der EP 0 440 403 B1 ist ein verstellbarer Lenksäulenmechanismus bekannt geworden, wobei zur Einstellung einer Höhenposition eine karosserieseitig fest angeordnete Verzahnung vorgesehen ist, in die ein mit der Lenksäule verbundenes Zahnsegment eingreift. Das Zahnsegment wird über einen schwenkbaren Exzenter vorgespannt.

Die US 4,472,982 zeigt eine Schwenkeinrichtung für eine Lenksäule. Eine Konsole für die Lenksäule ist um eine Karosserie fest angeordnete Achse schwenkbar gehalten. Zum Fixieren der eingestellten Position ist an der karosserieseitigen Aufnahme ein radial zur Schwenkachse verlaufendes Zahnsegment vorgesehen. In dieses Zahnsegment greift ein mit der Konsole verbundenes Gegenstück ein.

Aus der US 4,541,298 ist es bekannt, an einer Konsole zur Aufnahme einer Lenksäule Zahnstangen vorzusehen. Mit den Zahnstangen befinden sich Zahnräder im Eingriff, an der karosserieseitig gehaltenen Aufnahme befinden sich zweite Zahnstangen und jeweils korrespondierende Zahnräder. Die Paare von Zahnrädern sind über stirnseitige Verzahnungen gegeneinander festsetzbar, sobald über eine Spannachse die Zahnräder gegeneinander verspannt werden.

Die DE 36 19 125 C1 offenbart eine verstellbare Lenksäule eines Kraftfahrzeuges, bei der zu beiden Seiten der Lenksäule Paare von Zahnsegmenten angeordnet sind. Die Paare von Zahnsegmenten sind senkrecht zueinander ausgerichtet und über eine gemeinsame Spannvorrichtung festsetzbar.

Die US-A-5 477 744 zeigt eine Lenksäule gemäß Oberbegriff des Anspruchs 1.

Gegenüber dem Stand der Technik ist es Aufgabe der Erfindung, eine Verriegelungsvorrichtung für eine einstellbare Lenksäule zu schaffen, die hinsichtlich des benötigten Bauraumes verbessert ist.

Diese Aufgabe wird erfindungemäß mit den Merkmalen des Patentanspruches 1 gelöst. Durch diese Anordnung baut die erfindungsgemäße Lenksäule sehr schmal, denn je nach Anordnung des Schiebesitzes ragt die Verstelleinrichtung gar nicht oder nur wenig in der Breite über die Lenksäule hinaus. Durch die Anordnung des Schiebsitzes unterhalb der Lenksäule ist seitlich der Lenksäule lediglich Bauraum notwenig, um die Lenker an der Lenksäule vorbeizuführen.

Vorteilhafte Weiterbildungen der Erfindung sind in den Unteransprüchen beschrieben.

So wird vorgeschlagen, eine Konsole vorzusehen, die das Schwenklager und den Lenker aufnimmt. Durch diese Massnahme ist eine in sich geschlossene Lenksäuleneinheit gebildet, die als Ganzes vormontierbar ist. Da alle beweglichen Elemente, d.h. das Schwenklager und der Lenker, in der Konsole aufgenommen sind, ist auch keine weitere Einstellung mehr erforderlich. Auch schwingungstechnisch ist diese in sich geschlossenen Lenksäuleneinheit von Vorteil. Die Lenksäuleneinheit muss nicht unmittelbar an der Karroserie befestigt sein, sondern kann ebenso an einen Querträger oder an einer Lagereinheit für die Pedalerie gehalten sein.

Weiter wird vorgeschlagen, die Lenker als Kastenschwinge auszuführen, um die Steifigkeit der Anordnung zu erhöhen.

Gemäß der Erfindung wird vorgeschlagen, die Verriegelungseinrichtung am Schiebesitz angreifen zu lassen. Durch diese Maßnahme wird der bauliche Aufwand sowie der benötigte Bauraum gering gehalten. Der Schiebesitz ist in der Regel zentral auf bzw. unter der Lenksäule angeordnet, so dass eine hier wirksame Verriegelungsvorrichtung auf oder unter der Lenksäule, nicht aber seitlich an der Lenksäule angeordnet ist. Außerdem ist nur eine einzige Verriegelungsvorrichtung notwenig.

Es wird vorgeschlagen, eine weitere Verstelleinrichtung mit zugeordneter Verriegelungseinrichtung vorzusehen, die in Längsrichtung der Lenksäule wirksam sind. Bei dieser Anordnung kann in vorteilhafter Weise für beide Verriegelungseinrichtungen eine gemeinsame Betätigungseinrichtung vorgesehen sein. Über die Verminderung des baulichen Aufwandes hinaus ist hiermit die Bediensicherheit bei der Einstellung der Lenksäule verbessert, denn durch die Betätigung der einzigen Betätigungseinrichtung kann der Fahrer die Lenksäule vollständig entriegeln bzw. verriegeln.

Die Verriegelungseinrichtungen bestehen jeweils vorzugsweise aus einem Zahnsegment, einem korrespondierenden Druckstück mit stirnseitiger Verzahnung und einem federbelastetem Kegel. Der federbelastete Kegel ist parallel zum Zahnsegment, das Druckstück senkrecht hierzu geführt. Im Ruhezustand schiebt die Feder den Kegel auf das Druckstück, so dass die stirnseitige Verzahnung des Druckstückes in das Zahnsegment gepresst wird. Diese Verriegelungseinrichtung ist im Ruhezustand verriegelt und wird durch eine Verschiebung des Kegelstückes entgegen der Kraft der Feder entriegelt. Die Verwendung eines Kegels ist wegen der Linienberührung zwischen Kegel und Druckstück vorteilhaft, wobei jedoch prinzipiell auch andere, insbesondere keilförmige Elemente anstelle des Kegels verwendet werden können. Wenn das Druckstück in Richtung der Schwerkraft gesehen unterhalb des Zahnsegmentes angeordnet ist, ergibt sich einer vereinfachte Entriegelung der Verriegelungseinrichtung, da die Schwerkraft bei zurückgeschobenem Kegel das Druckstück außer Eingriff bringt. Das Zahnsegment kann unmittelbar in das zu sichernde Bauteil eingearbeitet sein. Zur Verstellung in Längsrichtung kann beispielsweise das Zahnsegment als Verzahnung außenseits an einem Mantelrohr eingearbeitet sein, wobei das Mantelrohr im Lenkschutzrohr längsverschieblich geführt ist. Das Druckstück ist dann in einem Schacht geführt, der am Lenkschutzrohr angeordnet ist. Eine derartige Anordnung ist beispielsweise aus der DE 44 13 798 A1 bekannt.

Bei einer Anordnung der Kegel so, dass ihr verjüngtes Ende in Fahrtrichtung angeordnet ist, ergibt sich überdies der Vorteil, dass im Fall eines frontalen Zusammenstoßes die Verriegelungseinrichtungen durch die auftretenden Beschleunigungen zusätzlich in Verriegelungsrichtung belastet werden, so dass der Verriegelungseffekt verstärkt wird und eine Verlagerung der Lenksäule durch Öffnen der Verriegelungsrichtung sicher verhindert werden kann.

Bei der in Höhenrichtung wirksamen Verriegelungseinrichtung kann das Zahnsegment beispielsweise über einen Arm mit einem beweglichen Teil des Schiebesitzes verbunden sein. Vorzugsweise ist das Zahnsegment dann ebenfalls am Lenkschutzrohr geführt und ein das Drucksegment aufnehmender Schacht ist im Bereich dieser Führung am Lenkschutzrohr angeordnet. Bei einer solchen Anordnung ist es besonders leicht möglich, in vorteilhafte Weise die beiden Verriegelungseinrichtungen örtlich benachbart anzuordnen. Eine solche Anordnung hat den Vorteil, dass die gemeinsame Betätigung der Verriegelungseinrichtungen mit geringem baulichen Aufwand zu erzielen ist.

Schließlich ist es von Vorteil, wenn die beiden Verriegelungseinrichtungen so ausgebildet sind, dass weitestgehend identischen Bauelemente verwendet werden können. So können insbesondere die Druckstücke und die Kegel als Gleichteile ausgebildet sein.

Die beiden Verriegelungseinrichtungen können fluchtend angeordnet sein. In diesem Fall vermindert sich der Bearbeitungsaufwand, weil sich benötigte Bohrungen in einer einzigen Aufspannung herstellen lassen. Auch das Gusswerkzeug für das Gehäuse kann einfacher ausfallen und Schieber des Gusswerkzeuges können zusammengefasst werden.

Die beiden Verriegelungseinrichtungen können gleichwirkend oder entgegengesetzt wirkend angeordnet sein. Bei gleichwirkender Anordnung ist die gemeinsame Betätigungsvorrichtung am Ende der beiden hintereinander liegenden Verriegelungseinrichtungen vorzusehen. Bei entgegengesetzt wirkenden Verriegelungseinrichtungen ist die gemeinsame Betätigungsvorrichtung zwischen den Vorriegelungseinrichtungen anzuordnen.

Die beiden Verriegelungseinrichtungen können gleichzeitig oder nacheinander betätigt werden. Bei gleichzeitiger Betätigung öffnet eine Aktivierung der Betätigungsvorrichtung beide Verriegelungseinrichtungen, und die Lenksäule ist in Höhen- und Längsrichtung frei bewegbar. Bei nacheinander erfolgender Betätigung kann eine Zwischenstellung der Betätigungsvorrichtung vorgesehen sein, in der z.B. die Lenksäule nur in Höhenrichtung einstellbar ist. Erst wenn die Betätigungsvorrichtung durch eine zweite Aktivierung ihre Endstellung erreicht, ist die Lenksäule ist in Höhen- und Längsrichtung frei bewegbar.

### <ARM 13, MECH BETÄTIGUNG>

Als Betätigungseinrichtung für die beiden Verriegelungseinrichtungen kann ein elektrischer Getriebemotor oder eine manuelle Betätigungseinrichtung vorgesehen sein. Die manuelle Betätigungseinrichtung besteht vorzugsweise aus einer Handhabe, die drehbar gelagert und zur Ereugung einer Längsbewegung auf einer spiralförmigen Rampe gehalten ist. Eine mit der Handhabe verbundene Zugstange durchdringt die federbelasteten Kegel und überträgt die Längsbewegung der Handhabe auf die Kegel.

Die Verwendung der erfindungsgemäßen einstellbaren Lenksäule ist vorzugsweise für Kraftfahrzeuge vorgesehen, hierauf aber nicht beschränkt.

Die Erfindung ist nachstehend anhand des in den Figuren dargestellten Ausführungsbeispieles näher erläutert. Es zeigen:
- Fig. 1: eine seitliche Einsicht einer einstellbaren Lenksäule und
- Fig. 2: einen Schnitt nach der Linie I-I der Fig. 1
- Fig. 3: eine Detailansicht von Verriegelungseinrichtungen 15, 16 nach Fig. 1,
- Fig. 4: eine Detailansicht einer Kastenschwinge 7 nach Fig. 1,
- Fig. 5: eine alternative Ausführung der Verriegelungseinrichtungen,
- Fig. 6: eine Detailansicht einer Betätigungseinrichtung nach Fig. 5,
- Fig. 7: einen Schnitt nach einer weiteren alternativen Ausführung mit manueller Betätigung, und
- Fig. 8: eine um 90° gedrehte Darstellung einer Handhabe nach Fig. 8.

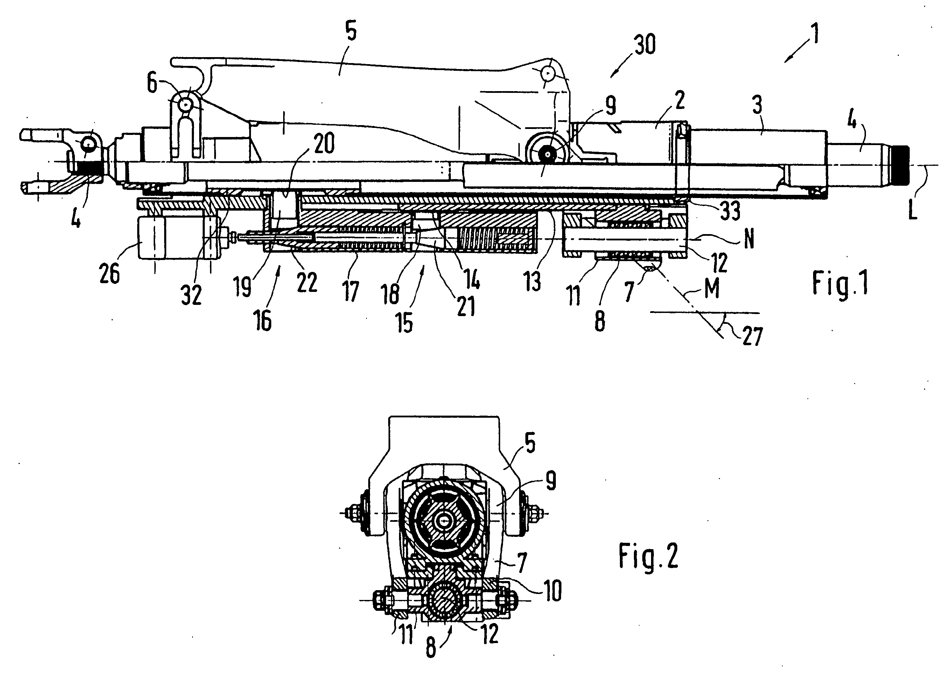

Fig. 1 zeigt eine einstellbare Lenksäule 1 in einer Seitenansicht. Die Lenksäule 1 besteht aus einem Lenkschutzrohr 2, einem Mantelrohr 3 und einer Lenkwelle 4. Das Lenkschutzrohr 2 ist an einer Konsole 5 gehalten, die ihrerseits über einen nicht dargestellten Träger für eine Pedalerie des Fahrzeuges an einer Karosserie dieses Fahrzeuges befestigt ist. Das Mantelrohr 3 ist im Lenkschutzrohr 2 mittels einer ersten Verstelleinrichtung, bestehend aus Lagern 32 und 33, in Richtung der Lenkachse L längsverschieblich gehalten. Die Lenkwelle 4 ist innerhalb des Mantelrohres 3 drehbar gelagert.

Das Lenkschutzrohr 2 ist mit der Konsole 5 über eine zweite Verstelleinrichtung 30 verbunden, die aus einem Schwenklager 6 und einem oder mehreren Lenkern 7 besteht, die in einem Schiebesitz 8 am Lenkschutzrohr 2 gehalten sind. Die Lenker 7 sind in vorliegenden Beispiel als Kastenschwinge ausgeführt, die an ihrem ersten Ende 9 mit der Konsole 5 und am ihrem zweiten Lagerende 10 mit dem Schiebesitz 8 schwenkbar verbunden ist. Die Kastenschwinge 7 ist so angeordnet, dass Ihre Mittelachse M in keiner Position der Schwenkbewegung des Lenkschutzrohres 2 relativ zur Konsole 5 senkrecht zu einer Mittelachse N des Schiebsitzes 8 zu liegen kommt, da ansonsten die Schwenkbewegung des Lenkschutzrohres 2 blockiert wäre. Im dargestellten Beispiel ist in der oberen Ausgangsposition des Lenkschutzrohres 2 zwischen der Mittelachse M der Kastenschwinge 7 und der Mittelachse N des Schiebesitzes 8 ein Winkel 27 in der Größe von 45° vorgesehen.

Der Schiebsitz 8 besteht aus einem mit der Kastenschwinge 7 drehbar verbundenen Schiebestück 11, das auf einem Bolzen 12 parallel zur Lenkachse L am Lenkschutzrohr 2 geführt ist. Mit dem Schiebstück 11 verbunden ist ein Arm 13, der an seinem dem Schiebstück 11 abgewandeten Ende ein Zahnsegment 14 trägt. Ein am Lenkschutzrohr 2 befestigtes Gehäuse 17 nimmt zwei Verriegelungseinrichtungen 15, 16 auf. Die erste Verriegelungseinrichtung 15 wirkt dabei in Höhenrichtung H, d.h. auf ein Verschwenken des Lenkschutzrohres 2 relativ zur Konsole 5. Die zweite Verriegelungseinrichtung 16 blockiert ein Verschieben des Mantelrohres 3 in Richtung der Lenkachse L relativ zum Lenkschutzrohr 2. Im Gehäuse 17 sind zwei Drucksegmente 18, 19 geführt, die jeweils mit einer stirnseitigen Verzahnung versehen sind. Das erste Drucksegment 18 wirkt mit dem Zahnsegment 14 zusammen. Das zweite Drucksegment 19 wirkt mit einer Verzahnung 20 zusammen, die außenseits am Mantelrohr 3 im Bereich des Drucksegmentes eingearbeitet ist.

Die Drucksegmente 18, 19 werden durch Kegel 21, 22 bewegt, die durch Federn 23, 24 in Ihrer dargestellten Ruheposition gehalten sind. In dieser Ruheposition befinden sich die Verriegelungseinrichtungen 15, 16 in ihrem verriegeltem Zustand.

Eine am Kegel 21 befestigte Koppelstange 25 durchdringt den zweiten Kegel 22 sowie einen am zweiten Kegel 22 vorgesehenen zylindrischen Fortsatz 28. Die Koppelstange 25 und der zylindrischen Fortsatz 28 können im montierten Zustand, d.h. wenn sich die Verriegelungseinrichtungen 15, 16 in ihrem verriegeltem Zustand befinden, gemeinsam abgelängt werden, so dass eine mechanische oder elektromechanische Betätigungseinrichtung - hier ein Getriebemotor 26 - die Kegel 21, 22 synchron und entgegen der Kraft der Federn 23, 24 bewegen kann, um so die Verriegelungseinrichtungen 15, 16 in ihrem entriegeltem Zustand zu bringen. Die Kegel 21, 22 sind also separat gelagert, werden aber gemeinsam betätigt.

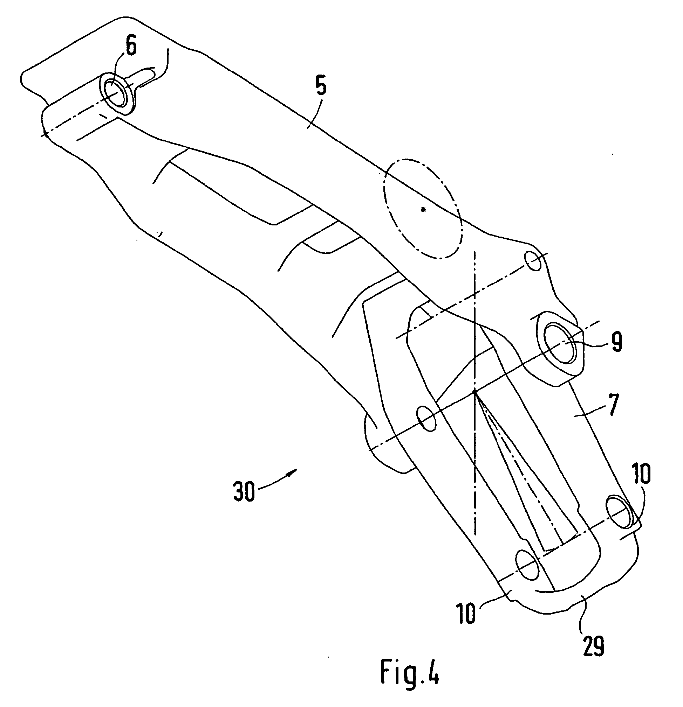

In der separate Ansicht nach Fig. 4 ist die Kastenschwinge 7 gesondert dargestellt. Gut zu erkennen ist, dass ein unterer Bügel 29 der Kastenschwinge 7 die Kastenschwinge noch unterhalb des Schiebestückes 11 schließt, das zwischen den unteren Lagerenden 10 der Kastenschwinge 7 angeordnet ist.

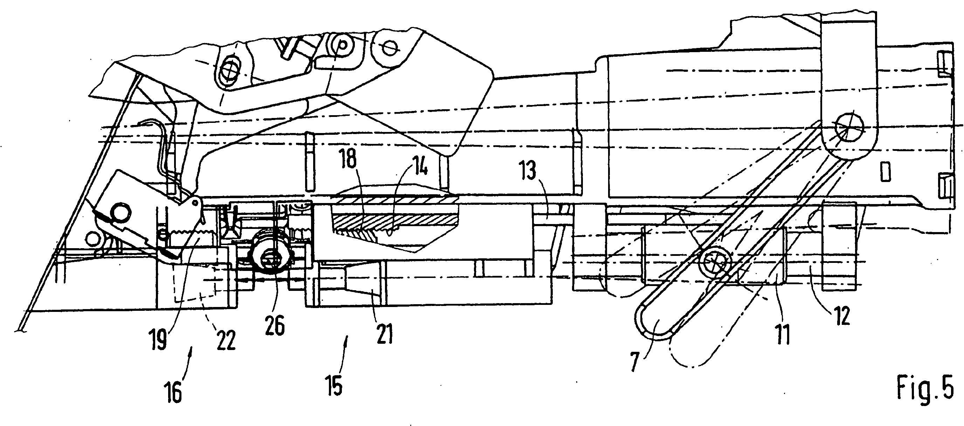

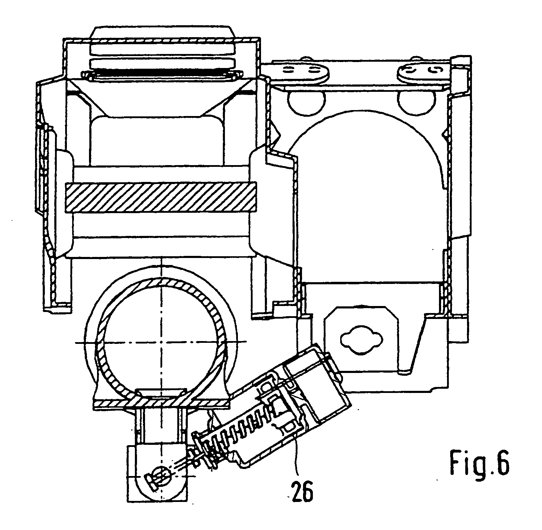

Fig. 5 zeigt eine alternative Anordnung der Verriegelungseinrichtungen 15, 16. Während nach dem vorstehend dargestellten Ausführungsbeispiel die Verriegelungseinrichtungen 15, 16 gleichgerichtet wirkend und miteinander fluchtend angeordnet waren, sind nach der alternativen Ausführung gemäß Fig. 5 die Verriegelungseinrichtungen 15 und 16 einander gegenüberstehend angeordnet. Die Betätigungseinrichtung 26 ist hier aus Platzgründen quer zur Betätigungsachse der Verriegelungseinrichtung 15, 16 angeordnet, wie insbesondere in Fig. 6 erkennbar. Das die Kastenschwinge 7 in der darstellten alternaiven Ausführung in Fahrtrichtung geneigt angeordnet ist, ist lediglich auf die verhinderten Platzverhältnisse bei dieser Ausführung zuzuführen.

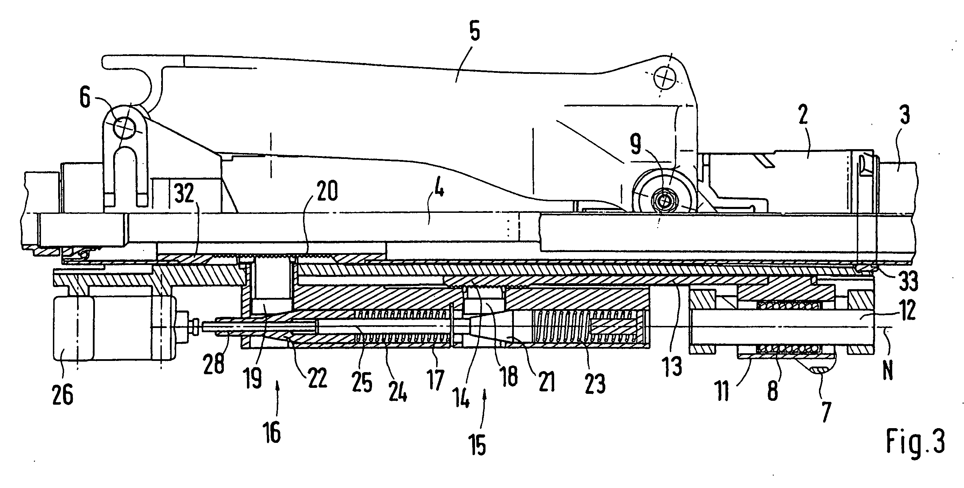

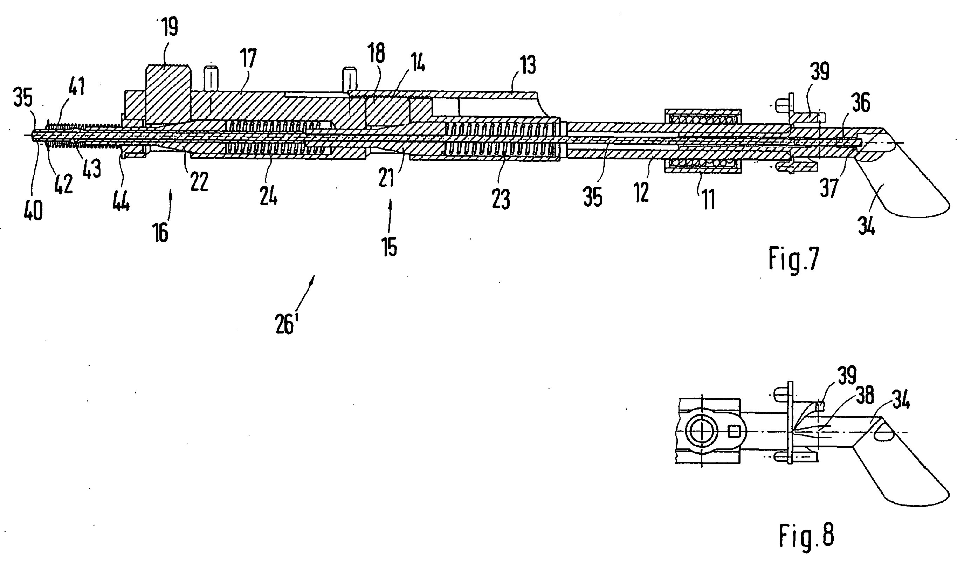

Fig. 7 zeigt einen weiteren Schnitt durch eine alternative Betätigungsvorrichtung. Die dargestellte Ansicht entspricht dabei der Darstellung nach Fig. 3; gleiche Elemente sind auch hier mit gleichen Bezugszeichen versehen. In der hier dargestellten Alternative ist die elektromotorische Betätigungsvorrichtung 26 (vergleiche Fig. 3) durch eine manuelle Betätigungsvorrichtung 26' ersetzt. Gut zu erkennen ist, dass das Gehäuse 17 zusammen mit den Verriegelungseinrichtungen 15,16 eine separate Einheit bildet, die am Lenkschutzrohr 2 montiert ist.

Die manuelle Betätigungsvorrichtung 26' besteht aus einer Handhabe 34 und einer Zugstange 35, die endseits mit einem Nippel 36 versehen ist. Der Nippel 36 ist in einer Bohrung 37 der Handhabe 34 drehbar gehalten, so dass Drehbewegungen der Handhabe 34 nicht auf die Zugstange 35 übertragen werden. An der Handhabe 34 sind seitlich zwei Vorsprünge 38 angeformt (siehe Fig. 8), die auf einer spiralförmigen Rampe 39 laufen. In der Rampe 39 ist die Handhabe 34 gleichzeitig drehbar geführt. Ein Verdrehen der Handhabe 34 - im dargestellten Beispiel um maximal 90° - führt zu einer Längsverschiebung der und damit der Zugstange 35 in Längsrichtung der Zugstange 35.

Die Zugstange 35 durchdringt dabei den - hier hohlgebohrt ausgeführten - Bolzen 12, die Kegel 21 und 22 sowie die Federn 23 und 24. Ein Klemmring 40 ist am freien Ende der Zugstange 35 angebracht und stützt sich über eine Feder 41 am Gehäuse 17 ab, so dass die Zugstange 35 und damit auch die Handhabe 34 stets unter Vorspannung gehalten sind.

Damit die Bewegung der Zugstange 35 auf die Kegel 21 und 22 übertragen wird, ist auf dem Endbereich der Zugstange 35 eine Hülse 42 aufgeschoben und über eine Verprägung 43 mit der Zugstange 35 verbunden. Die Hülse 42 stützt sich - mit einem voreingestellten Lüftspiel - an dem Kegel 21 ab, während sich die Verprägung 43 - ebenfalls mit einem voreingestellten Lüftspiel - am Kegel 22 abstützt. So wird eine Bewegung der Zugstange 35 auf beide Kegel 21, 22 übertragen. Der Kegel 21 ist dabei in einer Lagerbuchse 44 geführt.

### Bezugszeichenliste

- 1: Lenksäule
- 2: Lenkschutzrohr
- 3: Mantelrohr
- 4: Lenkwelle
- 5: Konsole
- 6: Schwenklager
- 7: Lenker, Kastenschwinge
- 8: Schiebesitz
- 9: erstes Ende
- 10: zweites Lagerende
- 11: Schiebestück
- 12: Bolzen
- 13: Arm
- 14: Zahnsegment
- 15: Verriegelungseinrichtung
- 16: Verriegelungseinrichtung
- 17: Gehäuse
- 18: Drucksegment
- 19: Drucksegment
- 20: Verzahnung
- 21: Kegel
- 22: Kegel
- 23: Feder
- 24: Feder
- 25: Koppelstange
- 26: Betätigungseinrichtung
- 27: Winkel
- 28: Fortsatz
- 29: unterer Bügel
- 30: Verstelleinrichtung
- 32: Lager
- 33: Lager
- 34: Handhabe
- 35: Zugstange
- 36: Nippel
- 37: Bohrung
- 38: Vorsprung
- 39: spiralförmige Rampe
- 40: Klemmring
- 41: Feder
- 42: Hülse
- 43: Verprägung
- 44: Lagerbuchse

- L: Lenkachse Längsachse
- M: Mittelachse
- N: Mittelachse
- H: Höhenrichtung

## Patentansprüche

1. Einstellbare Lenksäule (1) mit einer Verstelleinrichtung (30) zur Verstellung der Lenksäule in Kipprichtung und einer Verriegelung (15) der Lenksäule in Kipprichtung, wobei die Verstelleinrichtung (30) aus einem Schwenklager (6) an einer ortsfesten Konsole (5) für die Lenksäule (1) und einem beabstandet hierzu an der Konsole (5) schwenkbar gehaltenen Lenker (7) besteht und der Lenker (7) in einem in der Lenksäule (1) vorgesehenen Schiebesitz (8) relativ zu der Lenksäule (1) bewegbar und mit diesem verbunden ist, **dadurch gekennzeichnet, dass** eine Verriegelungseinrichtung (15) zur formschlüssigen Verriegelung der Lenksäule (1) in Kipprichtung auf den Schiebesitz (8) derart wirkt, dass die Relativbewegung des Lenkers (7) blockierbar ist, wozu in eine endseitige Verzahnung (14) an einem Arm (13), der mit einem auf der Lenksäule (1) verschießbaren Schiebestück (11) des Schiebesitzes (8) verbunden ist, ein korrespondierendes Druckstück (18) der Verriegelungseinrichtung (15) in einer Verriegelungsstellung eingreift.

2. Einstellbare Lenksäule nach Anspruch 1, **dadurch gekennzeichnet, dass** eine karosseriefeste Konsole (5) vorgesehen ist, die das Schwenklager (6) und den Lenker (7) aufnimmt.

3. Einstellbare Lenksäule nach Anspruch 1 oder 2, **dadurch gekennzeichnet, dass** eine zweite Verstelleinrichtung zur Verstellung der Lenksäule (1) in Längsrichtung und eine zweite Verriegelungseinrichtung (16) zur Verriegelung der Lenksäule in Längsrichtung vorgesehen sind.

4. Einstellbare Lenksäule nach Anspruch 3, **dadurch gekennzeichnet, dass** die erste Verriegelungseinrichtung (15) und die zweite Verriegelungseinrichtung (16) eine gemeinsame Betätigungseinrichtung (26) zur Betätigung der Verriegelungseinrichtungen (15, 16) aufweisen.

5. Einstellbare Lenksäule nach den Ansprüchen 1, 3 oder 4, **dadurch gekennzeichnet, dass** wenigstens eine Verriegelungseinrichtung (15, 16) aus einem Zahnsegment (14, 20) und einem korrespondierenden Druckstück (18, 19) besteht, und das Druckstück in etwa senkrecht zum Zahnsegment geführt und in Kontakt mit einem federbelasteten Kegel (21, 22) steht, wobei der Kegel in etwa senkrecht zur Bewegungsrichtung des Druckstückes geführt und von einer Betätigungseinrichtung (26) entgegen der Federkraft bewegbar ist.

6. Einstellbare Lenksäule nach Anspruch 5, **dadurch gekennzeichnet, dass** das Zahnsegment (14) der ersten Verriegelungseinrichtung (15) an einem Arm (13) angeordnet ist, der mit einem relativ zur Lenksäule (1) bewegbaren Schiebestück (11) des Schiebesitzes (8) verbunden ist.

7. Einstellbare Lenksäule nach einem der vorstehenden Ansprüche, **dadurch gekennzeichnet, dass**
- die Lenksäule (1) ein Lenkschutzrohr (2), ein Mantelrohr (3) und eine Lenkwelle (4) aufweist, wobei die Lenkwelle im Mantelrohr drehbar und das Mantelrohr im Lenkschutzrohr längsverschieblich gehalten ist, und das Lenkschutzrohr über den Lenker (7) an einer karosseriefesten konsole (5) gehalten ist,
- eine erste, formschlüssige Verriegelungseinrichtung (15) zur Verriegelung in Kipprichtung vorgesehen ist, wobei ein Zahnsegment (14) mit dem im Schiebesitz (11) gelagerten Teil des Lenkers (7) verbunden ist und ein mit dem Zahnsegment zusammenwirkendes Druckstück (18) am Lenkschutzrohr geführt ist, und
- eine zweite, formschlüssige Verriegelungseinrichtung (16) zur Verriegelung in Längsrichtung vorgesehen ist, wobei zwischen dem Mantelrohr und dem Lenkschutzrohr ein Zahnsegment (20) außenseits am Mantelrohr angeordnet und ein mit dem Zahnsegment zusammenwirkendes Druckstück (19) am Lenkschutzrohr geführt ist.

8. Einstellbare Lenksäule nach einem der Ansprüche 1 bis 7, **dadurch gekennzeichnet, dass** als Betätigungseinrichtung ein Getriebemotor (26) vorgesehen ist.

9. Einstellbare Lenksäule nach einem der Ansprüche 1 bis 7, **dadurch gekennzeichnet, dass** als Betätigungseinrichtung ein Griff (34) vorgesehen ist, der drehbar auf einer spiralförmigen Rampe (39), die an der Lenksäule vorgesehen ist, gelagert ist, wobei eine mit dem Griff verbundene Zugstange (35) die federbelasteten Kegel (21, 22) durchdringt.

## Claims

1. An adjustable steering column (1) with an adjusting device (30) for adjusting the steering column in the tilting direction and a locking device (15) for locking the steering column in the tilting direction, wherein the adjusting device (30) comprises a pivot bearing (6) on a fixed bracket (5) for the steering column (1), and a control lever (7) which is spaced apart therefrom and is pivotably held on the bracket (5), and the control lever (7) is movable relative to the steering column (1) in a sliding seat (8) provided in the steering column (1) and is connected to the sliding seat (8), **characterised in that** a locking device (15) for positively locking the steering column (1) in the tilting direction acts on the sliding seat (8) in such a way that the relative movement of the control lever (7) can be blocked, for which purpose end toothing (14) on an arm (13), which arm (13) is connected to a sliding piece (11) of the sliding seat (8), meshes with a corresponding thrust piece (18) of the locking device (15) in a locking position, the sliding piece (11) being displaceable on the steering column (1).

2. An adjustable steering column according to claim 1, **characterised in that** a bracket (5) is provided which is fixed to the bodywork and receives the pivot bearing (6) and the control lever (7).

3. An adjustable steering column according to claim 1 or 2, **characterised in that** a second adjusting device for adjusting the steering column (1) in the longitudinal direction and a second locking device (16) for locking the steering column in the longitudinal direction are provided.

4. An adjustable steering column according to claim 3, **characterised in that** the first locking device (15) and the second locking device (16) have a common actuating device (26) for actuating the locking devices (15, 16).

5. An adjustable steering column according to claim 1, 3 or 4, **characterised in that** at least one locking device (15; 16) comprises a toothed segment (14, 20) and a corresponding thrust piece (18, 19), and the thrust piece is guided approximately perpendicularly to the toothed segment and is in contact with a spring-loaded cone (21, 22), wherein the cone is guided approximately perpendicularly to the direction of movement of the thrust piece and is movable against the spring force by an actuating device (26).

6. An adjustable steering column according to claim 5, **characterised in that** the toothed segment (14) of the first locking device (15) is arranged on an arm (13) which is connected to a sliding piece (11) of the sliding seat (8), the sliding piece (11) being movable relative to the steering column (1).

7. An adjustable steering column according to any one of the preceding claims, **characterised in that**
- the steering column (1) has a steering-column protective tube (2), a casing tube (3) and a steering shaft (4), wherein the steering shaft is rotatably held in the casing tube, and the casing tube is longitudinally displaceably held in the steering-column protective tube, and the steering-column protective tube is held by the control lever (7) on a bracket (5) fixed to the bodywork,
- a first positively engaging locking device (15) for locking in the tilting direction is provided, wherein a toothed segment (14) is connected to the part of the control lever (7) mounted in the sliding seat (11), and a thrust piece (18) co-operating with the toothed segment is guided on the steering-column protective tube, and
- a second positively engaging locking device (16) for locking in the longitudinal direction is provided, wherein a toothed segment (20) is arranged on the outside of the casing tube between the casing tube and the steering-column protective tube, and a thrust piece (19) co-operating with the toothed segment is guided on the steering-column protective tube.

8. An adjustable steering column according to any one of claims 1 to 7, **characterised in that** a geared motor (26) is provided as an actuating device.

9. An adjustable steering column according to any one of claims 1 to 7, **characterised in that** a handle (34) is provided as an actuating device and is rotatably mounted on a spiral ramp (39) provided on the steering column, wherein a tension rod (35) connected to the handle extends through the spring-loaded cone (21, 22).

## Revendications

1. Colonne de direction réglable en position (1) avec un dispositif de réglage (30) pour le réglage de la colonne de direction dans le sens du basculement et un verrouillage (15) de la colonne de direction dans le sens du basculement, le dispositif de réglage (30) étant composé d'un palier d'articulation (6) sur une console fixe (5) pour la colonne de direction (1) et d'une bielle de liaison (7) pivotante montée sur la console (5) à distance du palier, et la bielle de liaison (7) étant mobile relativement à la colonne de direction (1) dans un ajustement coulissant (8) prévu dans la colonne de direction (1) et raccordée à celui-ci, **caractérisée en ce qu'**un dispositif de verrouillage (15) pour le verrouillage par correspondance de forme de la colonne de direction (1) dans le sens du basculement agit sur l'ajustement coulissant (8) de manière à bloquer le déplacement relatif de la bielle de liaison (7), ce pourquoi, dans une denture (14) terminale sur un bras (13) raccordé à une pièce coulissante (11) de l'ajustement coulissant (8) déplaçable sur la colonne de direction (1), une pièce de pression (18) correspondante du dispositif de verrouillage (15) s'engrène dans une position de verrouillage.

2. Colonne de direction réglable selon la revendication 1, **caractérisée en ce qu'**une console (5) fixe sur la carrosserie est prévue, où sont logés le palier d'articulation (6) et la bielle de liaison (7).

3. Colonne de direction réglable selon la revendication 1 ou 2, **caractérisée en ce qu'**un deuxième dispositif de réglage est prévu pour le réglage de la colonne de direction (1) en sens longitudinal, et un deuxième dispositif de verrouillage (16) pour le verrouillage de la colonne de direction en sens longitudinal.

4. Colonne de direction réglable selon la revendication 3, **caractérisée en ce que** le premier dispositif de verrouillage (15) et le deuxième dispositif de verrouillage (16) présentent un dispositif de manoeuvre commun (26) pour l'actionnement des dispositifs de verrouillage (15, 16).

5. Colonne de direction réglable selon les revendications 1,3 ou 4, **caractérisée en ce qu'**au moins un dispositif de verrouillage (15, 16) se compose d'un segment denté (14, 20) et d'une pièce de pression (18, 19) correspondante, et **en ce que** la pièce de pression est guidée sensiblement perpendiculairement au segment denté et est au contact d'un cône sous la contrainte d'un ressort (21, 22), ledit cône étant guidé sensiblement perpendiculairement au sens de déplacement de la pièce de pression, et déplaçable par un dispositif de manoeuvre (26) contre la force du ressort.

6. Colonne de direction réglable selon la revendication 5, **caractérisée en ce que** le segment denté (14) du premier dispositif de verrouillage (15) est disposé sur un bras (13) raccordé à une pièce coulissante (11) de l'ajustement coulissant (8) déplaçable relativement à la colonne de direction (1).

7. Colonne de direction réglable selon l'une des revendications précédentes, **caractérisée en ce que**
- la colonne de direction (1) comporte une gaine protectrice de direction (2), un fourreau (3) et un arbre de direction (4), ledit arbre de direction étant rotatif dans le fourreau et le fourreau logé dans la gaine protectrice de direction de manière à pouvoir être coulissé dans le sens de la longueur, et la gaine protectrice direction étant montée au-dessus de la bielle de liaison (7) sur une console (5) fixe sur la carrosserie,
- un premier dispositif de verrouillage (15) par correspondance de forme est prévu pour le verrouillage dans le sens d'oscillation, un segment denté (14) étant raccordé à la partie de la bielle de liaison (7) logée dans l'ajustement coulissant (8) et une pièce de pression (18) coopérant avec le segment denté étant guidée sur la gaine protectrice de direction, et
- un deuxième dispositif de verrouillage (16) par correspondance de forme est prévu pour le verrouillage en sens longitudinal, un segment denté (20) étant extérieurement disposé sur le fourreau entre le fourreau et la gaine protectrice de direction, et une pièce de pression (19) coopérant avec le segment denté étant guidée sur la gaine protectrice de direction.

8. Colonne de direction réglable selon l'une des revendications 1 à 7, **caractérisée en ce qu'**un moto-réducteur (26) est prévu en tant que dispositif de manoeuvre.

9. Colonne de direction réglable selon l'une des revendications 1 à 7, **caractérisée en ce qu'**une poignée (34) est prévue comme dispositif de manoeuvre, laquelle est montée libre en rotation sur une rampe en spirale (39) prévue sur la colonne de direction, une tige de traction (35) raccordée à la poignée traversant les cônes (21, 22) sous contrainte de ressort.
